(19) **Europäisches Patentamt / European Patent Office / Office européen des brevets**

(11) **EP 3 387 410 B1**

(12) **EUROPEAN PATENT SPECIFICATION**

(45) Date of publication and mention of the grant of the patent:
**26.07.2023 Bulletin 2023/30**

(21) Application number: **16873724.5**

(22) Date of filing: **07.12.2016**

(51) International Patent Classification (IPC):
**G01N 3/08** (2006.01)   **B21B 27/00** (2006.01)
**B21B 27/02** (2006.01)   **G01N 3/00** (2006.01)
**G01N 3/10** (2006.01)   **C21D 8/02** (2006.01)
**C21D 9/46** (2006.01)   **G01N 3/20** (2006.01)
**B21B 45/00** (2006.01)

(52) Cooperative Patent Classification (CPC):
**B21B 45/00; C21D 8/0242;** C21D 9/46;
C21D 2221/10; G01N 3/08; G01N 3/20

(86) International application number:
**PCT/US2016/065298**

(87) International publication number:
**WO 2017/100264 (15.06.2017 Gazette 2017/24)**

(54) **SHEAR ENHANCED ROLLING (SER). A METHOD TO IMPROVE GRAIN SIZE UNIFORMITY IN ROLLED ALLOY BILLETS.**

SCHERUNGSERHÖHTES WALZEN (SER): VERFAHREN ZUR VERBESSERUNG DER KORNGRÖSSENGLEICHFÖRMIGKEIT IN GEWALZTEN ALUMINIUMKNÜPPEL

LAMINAGE AMÉLIORÉ PAR CISAILLEMENT (SER) LA PRÉSENTE INVENTION CONCERNE UN PROCÉDÉ POUR AMÉLIORER L'UNIFORMITÉ DE GROSSEUR DE GRAIN DANS DES BILLETTES D'ALLIAGE LAMINÉES.

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.12.2015 US 201562264653 P**

(43) Date of publication of application:
**17.10.2018 Bulletin 2018/42**

(73) Proprietor: **The American University in Cairo New York, NY 10018-2729 (US)**

(72) Inventors:
• **ELKHODARY, Khalil, I.**
  **New Cairo 11835 (EG)**
• **SALEM, Hanadi, G.**
  **New Cairo 11835 (EG)**
• **BAKR, Mohamed**
  **New Cairo 11835 (EG)**
• **ELBADRY, Mohamed**
  **Cairo 11728 (EG)**

(74) Representative: **FRKelly**
  **27 Clyde Road**
  **Dublin D04 F838 (IE)**

(56) References cited:
GB-A- 478 048          GB-A- 478 048
GB-A- 2 007 556        US-A- 4 539 830
US-A- 4 826 138        US-A- 5 687 595
US-A1- 2007 044 531    US-A1- 2011 265 917
US-A1- 2012 174 643    US-A1- 2013 006 542

## Description

### FIELD OF THE INVENTION

The present invention relates generally to rolled sections. More particularly, the invention relates to a method of improving grain size uniformity and grain refinement across the billet cross section.

### BACKGROUND OF THE INVENTION

Improved rolled billet quality for metal working and construction presents a practical issue when matched with material cost and delivery timelines. What is needed is a low cost and efficient method that enhances shear in the core of the billet more than at the surfaces, thereby countering the large amounts of shear at the surfaces induced by rollers.

GB 478 048 relates to an apparatus for uncoiling sheet metal comprising a support for rotatably holding a coil of hot rolled sheet metal, a transversely curved metal working member engageable against the coil along the line at which the sheet leaves the coil, and means for maintaining the sheet upon leaving the coil in contact with said metal working member continuously throughout a sufficient arc thereof to reverse the curvature of the sheet.

US 2012/17 4643 relates to a method and a device for continuously stretch-bend-leveling metal strips, wherein a strip under a tensile stress below the elastic limit is alternatingly bent about at least four straightening rollers in the plastic or elastic-plastic region and thereby undergoes plastic stretching. The bending radii of all four straightening rollers are thereby set dually and independently of each other, as the straightening rollers are set up having individually controlled positions.

US 4,826,138 relates to a method and apparatus for heat treating steel plates subject to longitudinal length distortion wherein the plate at a temperature of the critical temperature of the steel passes through leveling rolls to remove the length distortion and immediately thereafter through quenching rolls which maintain length uniformity during quenching of the plate.

US 4,539,830 describes a thin metal strip made by hot-rolling a strip workpiece, stretch-bend leveling the hot-rolled strip workpiece immediately after hot-rolling it, tensioning the strip workpiece with a predetermined tension while stretch-bend leveling it, and thereafter coiling up the workpiece.

### SUMMARY OF THE INVENTION

The present invention is defined in appended independent claim 1 to which reference should be made. Advantageous features are set out in the appended dependent claims. To address the needs in the art, a method of increasing grain uniformity in rolled metal is provided that includes applying an axial tension to a rolled metal section, where the rolled metal section is secured at a first end and secured at a second end, and applying a transverse load to the rolled metal section between the first end and the second end, where the transverse load displaces the rolled metal section, where the transverse load is configured to induce a stress distribution in the rolled metal section, where the stress distribution alters a core of the rolled metal section to exceed an elastic limit and alters the outer layers of the rolled metal section to approach the elastic limit, where the axial tension, the transverse load and the displacement induce a smaller average grain size in the rolled metal section, and a grain size distribution in the cross section that is more uniform.

According to one aspect of the invention, the axial tension is induced using a source that includes hydraulic, pneumatic, mechanical, magnetic or electrical sources.

In another aspect of the invention, the transverse load is induced using a source that includes hydraulic, pneumatic, mechanical, magnetic or electrical sources.

In one aspect, the transverse load is balanced by moving or fixed supports at the first end and the second end of the rolled metal section. Here, the moving or fixed supports are induced using a source that includes hydraulic, pneumatic, mechanical, magnetic or electrical sources.

In another aspect of the invention, the transverse load includes a fixed span, a fixed profile, a fixed strength and a fixed duration on at least one of the surfaces of the rolled metal section, or a variable span, a variable profile, a variable strength and a variable duration on at least one of the surfaces of the rolled metal section.

In yet another aspect of the invention, the rolled metal section has a material composition that obeys a Hall-Petch relation.

According to another aspect of the invention, a duration of the transverse load is up to when a core of the rolled metal section deforms plastically and enhances grain uniformity.

In a further aspect of the invention, the rolled metal section is disposed between a first roller pair and a second roller pair, where the first roller pair comprises a first top roller and a first bottom roller, where a bottom surface of the first top roller opposed a top surface of the first bottom roller, where the second roller pair includes a second top roller and a second bottom roller, where a bottom surface of the second top roller opposes a top surface of the second bottom roller, where a third roller is positioned mid-span between the first roller pair and the second roller pair, where the first roller pair, the second roller pair, and the third roller are parallel cylinders with one another, where the tension is applied to the rolled metal section according to a desired average grain size in a cross-section of the rolled metal section, where the displacement is by the third roller onto the rolled metal section, where the displacement corresponds to a specific applied force and distance according to the desired average grain size in a cross-section of the metal section, where a stress of the metal section alters a core of the rolled metal section to exceed its elastic limit, where the stress of the rolled metal section disposes outer layers of the rolled metal section below or near their elastic limits, where enhanced grain size uniformity in the metal section is achieved.

## BRIEF DESCRIPTION OF THE DRAWINGS

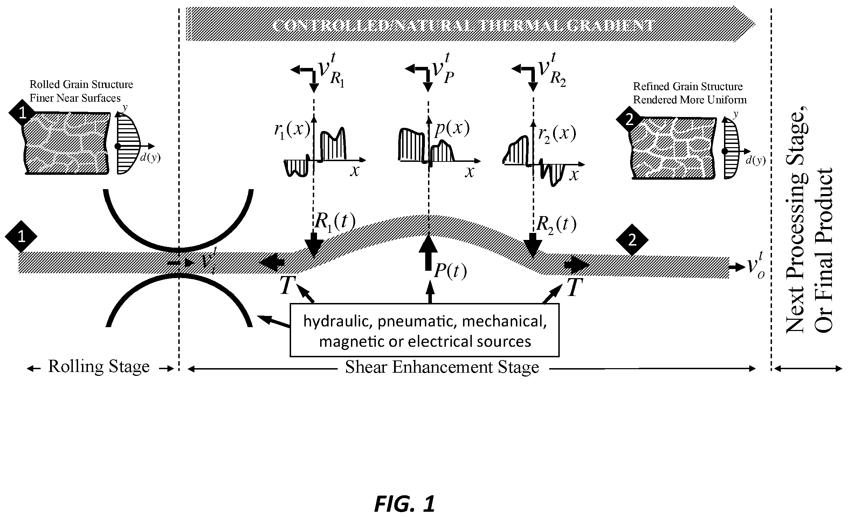

FIG. 1      shows an example of the invention where Section (1) indicates the rolled non-uniform microstructure, and (2) the microstructure post shear enhancement microstructure, indicating a core refined to comparable level to that near the surfaces and a smaller average grain size. The mechanism relies on an interplay of transverse and axial loads that may be moving or stationary with respect to the rolled metal, and of a fixed or variable spatial and/or temporal profile. Shear enhancement may be conducted in between rolling stages, or at the end, and may deliver the final rolled product or be supplemented by additional processing operations, according to one embodiment of the invention.

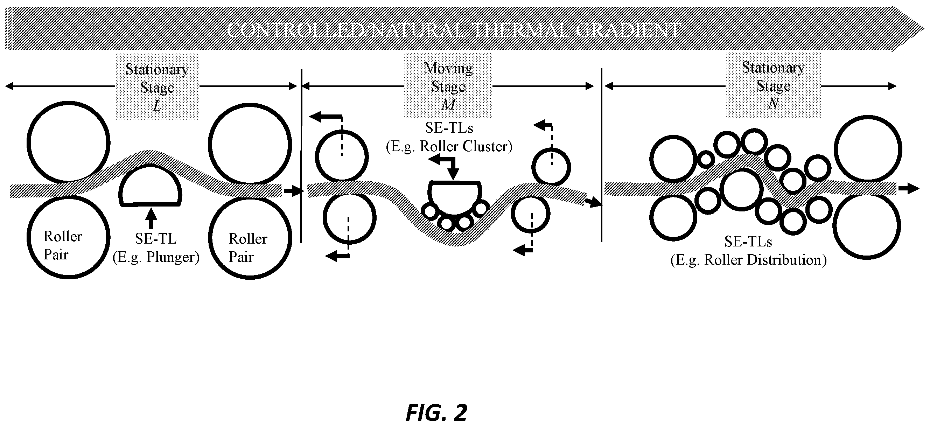

FIG. 2      shows Example of application of Transverse Loading (TL) via purely mechanical means, to induce Shear Enhancement (SE). Various SE roller setups could be used for instance depending on need, and the TL can be induced along any combination of directions $x_j$. Multiple SE stages can also be used, and combined with thermal treatment. All rollers, whether stationary or mobile, must jointly control transverse load and axial tension. The shear enhanced sections may retain their straightness or be allowed to bend per roller setup design, according to one embodiment of the invention.

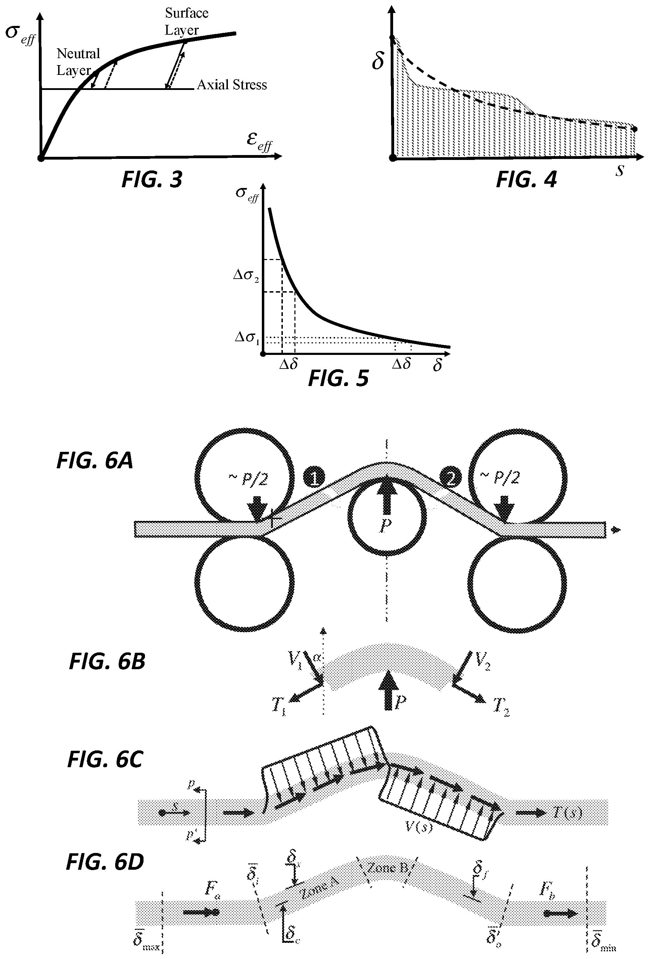

FIG. 3      shows a view of stress-strain behavior at neutral and surface layers. The coarser grain structure in a section's core anticipates a smaller yield strength (by the Hall-Petch relation). The level of axial tension induced in the rolled material may control stress unloading in material flowing away from the leftmost roller. SER transverse loading then induces plasticity in the core (via longitudinal shear stress) more readily than in the surface layers (via normal bending stress), even for cases where the magnitude of shear stress is smaller than the normal stress, according to one embodiment of the invention.

FIG. 4      shows anticipated grain size $\delta$ refinement for **FIG. 2** SER setup, shown as a function of axial position s, measured from the roller on the left. In our analytic study, we approximate with an exponential trend (dashed line), for simplicity, according to one embodiment of the invention.

FIG. 5      shows a graph of microstructures obeying the Hall-Petch relation are well suited for SER processing. A small stress increment ($\Delta\sigma_1$) in a material's plastic range will induce a significant refinement to coarse grains, as at the core of a rolled section. A much larger stress increment ($\Delta\sigma_2$) is needed to induce refinement in fine grains, as along the surface layers of a rolled section, assuming these layers also come in the plastic range during SER, according to one embodiment of the invention.

FIGs. 6A-6D      show (**6A**) an assumed statically determinate setup in the analysis, wherein each roller carries $P/2$ of the centered SER transverse load $P$. (**6B**) By sectioning on both sides of the SE roller symmetry of deformation and force fields is assumed, identifying axial tension $T$ and transverse shear force $V$ as internal forces balancing applied load $P$, when looking down sections parallel to $pp'$. (**6C**) Theoretical transverse internal force $V$ distribution over SER span s, and assumed constant axial tension $T$. $T$ is modeled for an effective stress value close to or at the yield strength of the rolled section core to induce plasticity and grain refinement in the core upon minimal bending. (**6D**) Multiple grain sizes are identified for the analytic SER model of *Zone A*, lying freely between the left roller and the SE roller. Zone B has its lower surface layer in full contact with the SE roller, and is where $V$ flips sign, according to embodiments of the current invention.

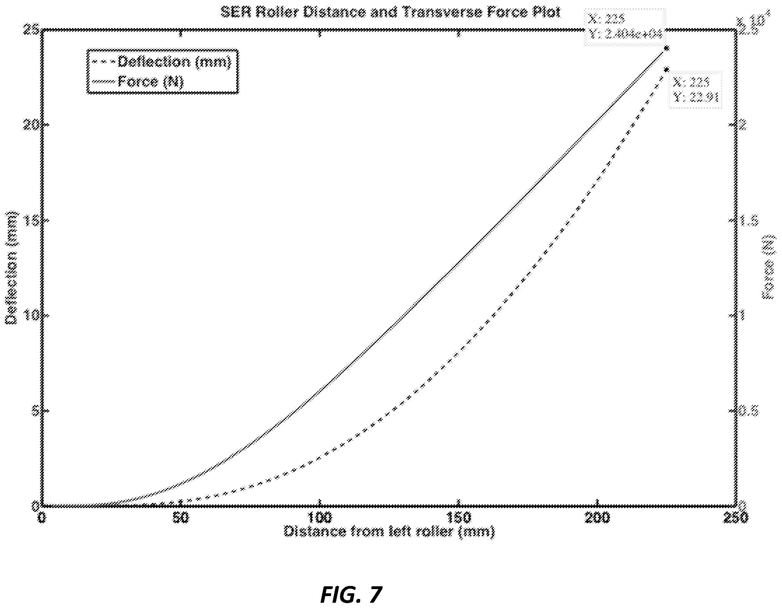

FIG. 7      shows a plot of net vertical forces (solid line) and deflections (dashed line) at mid-roller, as a function of its position from the left roller. When the applied load $P$ is at 225*mm* from the left roller, its value should be 24*k*N, and corresponding mid-roller rise should be 23*mm*, according to embodiments of the current invention.

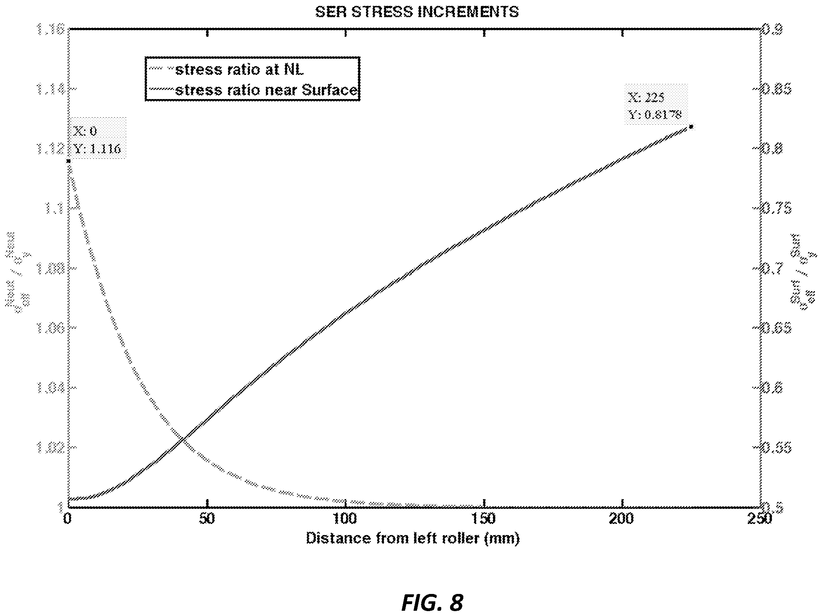

FIG 8      shows a comparison of yield-normalized effective stress between the neutral layer (dashed line) and surface layer (solid line). Control of axial tension for SER permits an immediate overshoot of the effective stress by ~11% at the neutral layer, above its yield strength, driving the grain refinement and corresponding strengthening of the core. Conversely, the surface layers are partially unloaded when they leave the leftmost roller and enter the SER stage. Bending of surface layers in SER then raises the effective stress in these layers to ~82% of the surficial yield strength (composed of finer grains). Thus, the surface layers will not participate in plastic deformation or grain refinement in the SER stage, permitting targeted grain refinement in the core, according to embodiments of the current invention.

| | |
|---|---|
| FIG. 9 | shows a 3D SER setup for finite element simulation. Key dimensions are as shown. A rectangular bar of 10mm×40mm×2000mm is rolled in this model. Five analytic-rigid rollers are here used. The leftmost pair induces a sectional reduction of 10%. The rightmost induces an additional reduction of 10%. The middle roller, initially tangent to the rectangular bar, rises by 10mm in 0.5sec, but only after the rectangular section has passed through the rightmost pair, to create the desired tension. The left and right rollers are assigned angular speeds of $\pi$ rad/sec to draw the rectangular bar, according to embodiments of the current invention. |
| FIGs. 10A-10B | shows a predicted shear stress (Pa) distribution before and after mid-roller rise, exhibiting increased shear stress in rolled material after the application of the transverse load. Moreover, a clear flip in sign of shear stress across the mid-roller may also be seen, consistent with the analytical model for shear force (FIG. 6C), according to embodiments of the current invention. |
| FIG. 11 | Grain size distribution across section depth, passing through the leftmost roller (top curve), leaving the same roller (middle curve) and past the mid-roller (bottom curve). The flatter grain distribution after SER indicates a more uniform grain structure in the cross section, and the lower its curve implies a smaller average grain size; both materializing via an application of shear enhancement, according to embodiments of the current invention. |
| FIG. 12 | shows computationally predicted applied vertical force at mid-roller, which fluctuates due to numerical artifact and the faceted discretization of the analytic rigid body representing the roller. Values fluctuate around 92 *k*N for a rise of 10 *mm* of the mid-roller. Clearly, the fully-fledged computations indicate a stiffer model, which is primarily attributed to the effect of residual stresses ignored in the analytical model, according to embodiments of the current invention. |

## DETAILED DESCRIPTION

The current invention is directed to shear enhanced rolling (SER) and is summarized in **FIG. 1**, and shown a basic form in **FIG. 2**, according to embodiments of the invention. The utility of SER is to induce targeted grain refinement in a rolled cross section's core, to provide a better match of grain refinement near surficial layers. SER promotes grain size uniformity across a rolled cross section, as well as reduces average grain size. The method by which SER operates relies on inducing longitudinal shear stress in a cross section via any mechanism of transverse loading and axial tension.

According to the current invention, the transverse load and tension may be implemented by mechanical, hydraulic, pneumatic, electrical or magnetic means. For instance, in **FIG. 2**, only basic mechanical means are illustrated, where free-to-rotate rollers or a plunger could be used to create the transverse load, while the tension could be mediated by the reduction ratio taking place at the rolling stations. As indicated in **FIG. 2**, multiple SER stages may be used with similar or different sources of transverse loading, and the stages may or may not be consecutive.

Axial tension may be controlled, e.g. to permit only mild unloading at the neutral axis post rolling stations, as shown in **FIG. 3**. In such a case, when the material flows past the rolling station on the left of the SE-TL roller (**FIG. 2**), the onset of plasticity in and near the neutral layers is facilitated, for small SE-TL induced curvatures and transverse displacements. As such, immediate grain refinement near the neutral layer would ensue over the SER span. Grain refinement in the shear enhancement stage for such a single SE-TL roller is expected to follow the trend in **FIG. 4**.

The finer grains near the surface layers might not participate in grain refinement for a given SER configuration, when SER transverse loads are designed to induce bending stresses beneath their higher yield values, as illustrated in **FIG. 3**. If the SE-TL induced radius of curvature is sufficiently small, and/or the axial tension is sufficiently large, then the microstructures obeying the Hall-Petch relation, **FIG. 5**, will also be more readily refined near the core than the surface layers, for a given stress increment. In all circumstances, keeping track of normal stresses induced near surface layers by the transverse load and longitudinal shear stress induced near the neutral layer is essential for properly targeted grain refinement in SER processes.

The procedure disclosed herein is particularized to the SER of rectangular rolled cross sections using the simple setup shown in **FIG. 6**, ignoring: residual stresses; rate effects, thermal softening, damage evolution or inertial effects, for a most straightforward illustration of the SER concept. These ignored effects are not included in a computational model, however, for further verification of our SER method under more practical conditions.

The first step toward the analytic model is thus to simplify the grain size variation over SER span, *s*. Instead of the anticipated distribution of **FIG. 3**, an exponential decay function is overlayed. Moreover, instead of axial parameter *s* for span, small deflections are assumed in the derivation, and work with the x-component only.

**Table 1**. Analytical model parameters, assuming a rectangular steel section SER*ed* at room temperature.

| Model parameter | Description | Value Selected | |
|---|---|---|---|
| $c$ | Half section height (assuming rectangular cross section) | 5 | mm |
| $t$ | Section thickness (assuming rectangular cross section) | 40 | mm |
| $x_0$ | Left most position of zone A, axial component. | 0 | mm |
| $x_{max}$ | Position of SE-TL roller, axial component. | 225 | mm |
| $y_0$ | Left most position of zone A, transverse component. | 0 | mm |
| $\theta_0$ | Left most inclination angle for zone A. | 0 | rad |
| $n$ | Material hardening exponent (Power-Law hardening assumed) | 0.31 | - |
| $m$ | Grain size exponential factor (Assuming exponential decay) | 20 | - |
| $H$ | Power-Law hardening, strain hardening coefficient | 300 | MPa |
| $k$ | Hall-Petch equation, square-root dependency factor | 23.4 | MPa√ |
| $\sigma_0$ | Hall-Fetch equation, reference effective strength | 70 | MPa |
| $\bar{\delta}_{max}$ | Largest average grain size in a section, entering leftmost roller | 57 | μm |
| $\bar{\delta}_{min}$ | Smallest average grain size in a section, leaving rightmost roller | 2.0 | μm |
| $\delta_c$ | Grain size in section core, entering SER stage. | 13.2 | μm |
| $\delta_f$ | Desired grain size for section core, leaving SER stage. | 11.0 | μm |
| $\delta_s$ | Grain size at section surface, entering SER stage. | 8.0 | μm |
| $\bar{\delta}_i$ | Average grain size in a section, entering SER stage. | 12 | μm |
| $\bar{\delta}_o$ | Average grain size in a section, leaving SER stage. | 6 | μm |

As such, the average grain (x) size at any cross section *x*, between left roller and right roller (Fig. 6), may be given as:

$$\overline{\delta}(x) = \left( \frac{\overline{\delta}_i - \overline{\delta}_0}{1 - \exp(m)} \left( 1 - \exp\left( m \cdot \frac{x_f - x}{x_f - x_0} \right) \right) + \overline{\delta}_0 \right) , \qquad (\text{Eq. 1})$$

where $x_f = 2x_p$, i.e. twice the distance from left roller to mid roller, assuming the SE-TL roller is located mid-span. The other parameters in Eq. 1 are defined in Table 1. Similarly, grain size (x) on the neutral layer may be also written as,

$$\delta(x) = \left( \frac{\delta_c - \delta_f}{1 - \exp(m)} \left( 1 - \exp\left( m \cdot \frac{x_f - x}{x_f - x_0} \right) \right) + \delta_f \right) , \qquad (\text{Eq. 2})$$

where the grain size parameters are also defined in Table 1.

Secondly, note that the difference in yield strengths between any two points of a material obeying the Hall-Petch relation may be written as,

$$\Delta\sigma_y(x) = \sigma_y^1 - \sigma_y^2 = \left( \frac{k}{\sqrt{\delta_1}} - \frac{k}{\sqrt{\delta_2}} \right), \qquad \text{(Eq. 3)}$$

Thirdly, we seek to find the maximum shear stress induced at the neutral layer as a result of the transverse load applied at the mid-roller (**FIG. 6**). Note that bending by the SE roller results in axial stresses of the form,

$$\sigma(x,y,z) \triangleq H\varepsilon^n(x,y)f(z) + \sigma^{tens}(x,y,z)$$

$$= H\frac{y^n}{\rho^n(x)}f(z) + \sigma^{tens}(x,y,z) \qquad , \qquad \text{(Eq. 4)}$$

where $\sigma^{tens}$ is the tensile stress between leftmost and rightmost rollers, and is assumed constant over the span of SER. $\rho$ is the radius of curvature, which is allowed to vary over the span of SER. $H$ and $n$ are material parameters described in Table 1, having assumed power-law hardening. The model is further derived for rectangular cross-sections, and may thus assume $f(z) = 1$.

A horizontal shear force $\Delta H$ will appear between layers ($y$) of the rolled material in the SER span, which may be computed between any two cross sections as:

$$\Delta H(x,y) \equiv \int_{A(y)} (\sigma_1 - \sigma_2) da = t\Delta x \int_{y\to c} \frac{d\sigma}{dx} dy, \qquad \text{(Eq. 5)}$$

where $t$ is the thickness of the cross section, and $\Delta x$ is the axial spacing between the chosen cross-sections. Focusing on the neutral layer, it is found that the correspondingly induced average shear stress ($\Delta\tau$) at the neutral layer (being the largest) may be computed as,

$$\Delta\tau(x) \equiv \frac{\Delta H(x,0)}{t\Delta x} = -\frac{1}{\rho^{n+1}}\frac{d\rho}{dx}\left( \frac{nHc^{n+1}}{n+1} \right), \qquad \text{(Eq. 6)}$$

where we differentiated Eq. 4 and plugged it into Eq. 5 to obtain Eq. 6. The radius of curvature is finally solved by combining Eq. 6 and Eq. 3, by assuming Tresca's criterion to define the *shear* strength difference, and by integrating over $x$,

$$-\frac{1}{n\rho^n(x)} + \frac{1}{n\rho_0^n} = T(x) - Q(x), \qquad \text{(Eq. 7)}$$

where,

$$T(x) \equiv \left( \frac{B}{\sqrt{\delta_f}} \right)(x - x_0), \qquad \text{(Eq. 8)}$$

$$Q(x) \equiv \Delta(x) - \Delta(x_0), \qquad \text{(Eq. 9)}$$

with,

$$\Delta(x) = \frac{B\left(x_0 - x_f\right)}{m\left(A + \delta_f\right)^{1/2}} \log\left(\frac{\left(A + \delta_f\right) - \frac{A}{2}\exp\left(m \cdot \frac{x_f - x}{x_f - x_0}\right) - (A + \delta_f)^{1/2}\sqrt{\delta(x)}}{\exp\left(m \cdot \frac{x_f - x}{x_f - x_0}\right)}\right), \quad \text{(Eq. 10)}$$

and,

$$A = \frac{\delta_c - \delta_f}{1 - \exp(m)}, \quad B = \left(\frac{n+1}{2n} \frac{k}{Hc^{n+1}}\right). \quad \text{(Eq. 11)}$$

Further it is assumed that $1/\rho_0 \to 0$, i.e. zone A in **FIG. 6** begins as flat, though slanted. It is also noted that as the $n^{th}$-root will be taken to find the curvature, it is required to exist; as such we require that $n \in \{\mathbb{R}^+ \backslash 2\mathbb{N}\}$.

Fourthly, solving for the transverse deflections of the mid-roller (located at $x_p$) as,

$$y(x_p) = \int_{x_0}^{x_p} dx \int_{x_0}^{x} dx \frac{1}{\rho(x)} + \theta_0(x - x_0) + y_0, \quad \text{(Eq. 12)}$$

where $\theta_0$ and $y_0$ are initial values, defined in Table 1.

Fifthly, the transverse shear force ($V$) induced by bending and the axial tension ($T$) to determine the required applied load ($P$) is solved for at the mid-roller to create the deflection predicted by Eq. 12. Hence, V(x) may be assumed constant over zone A and found by,

$$V(x) = V(x_0) \equiv \frac{dM}{dx}(x_0) = \int_{y,z} y \cdot \left(\frac{d\sigma}{dx}(x_0, y, z)\right) dy\,dz$$
$$= -tc\left(\frac{n+1}{n+2}\right)\left(\frac{k}{\sqrt{\delta_f}} - \frac{k}{\sqrt{\delta_c}}\right), \quad \text{(Eq. 13)}$$

where c is defined in Table 1. The axial tension $T$ may be estimated from the strength at the rightmost rollers. That is,

$$T \cong -F_b = -2ct\left(\frac{k}{\sqrt{\delta_f}}\right), \quad \text{(Eq. 14)}$$

where cross-sections $b$ and $a$ are identified in **FIG. 6D**. Grain sizes there may be computed by averaging the grain sizes defined on either side of $a$ and $b$. Finally, the applied load at the mid-roller is found from,

$$P_{app} \cong 2\left|V(x_p)\cos\alpha + T(x_p)\sin\alpha\right|, \quad \text{(Eq. 15)}$$

where $\alpha$ is defined in **FIG. 6B**, and may be approximated using the deflections $y$ predicted by Eq. 12, and the position $x_p$ of the mid-roller, measured from the leftmost roller.

Predictions from Eq. 12, and the net transverse forces are plotted in **FIG. 7**. It is predicted that if an SE-TL roller is located at 225mm from the leftmost roller (**FIG. 6**), and a grain refinement of ~17% is desired (13.2 μm → 11 μm) at the neutral layer, then a transverse displacement of 23 mm, and an applied force of 24kN are required at the SE-TL roller. This is for a 10-mm thick, 40 mm wide rectangular cross section bar, and assuming tensile stresses of ~200MPa are applied, i.e. the yield strength of the neutral layer, between leftmost and rightmost rollers.

For the selected value of axial tension, which was determined from the grain sizes at the rightmost rollers (therefore the reduction ratios), we further track in **FIG. 8** the effective stress at the neutral layer and surficial layer, each normalized by its respective yield strength (grain size dependent, according to the Hall-Petch relation). For the setup of **FIG. 6** therefore, plasticity does not take place at surficial layers during shear enhancement (82% of the yield strength), but plasticity does take place at the neutral layer (11% overstress of the initial yield strength) and the layer hardens by anticipated grain refinement, bringing the stress ratio there down to 100% by the end of the shear enhancement stage.

The procedure outlined in Eq. 1 to Eq. 15 can of course be adapted to arbitrary cross sectional shapes, to determine required loads and deflections in SER. However, it is difficult to include variations in residual stress, rate effects, thermal effects and/or damage. Residual stresses are especially relevant to practical processing. They are anticipated to increase stiffness (increase forces and decrease transverse deflections) of the rolled material in two ways: (a) by shifting the NL away from the centroid, so that bending stresses to do not cancel, and contribute to axial tension, and (b) by increasing the hardening of the material during deformation, which is pre-stressed.

As such, a computational study is performed that includes the effects we ignored in the analytical study, to further investigate the viability of SER grain refinement and uniformity.

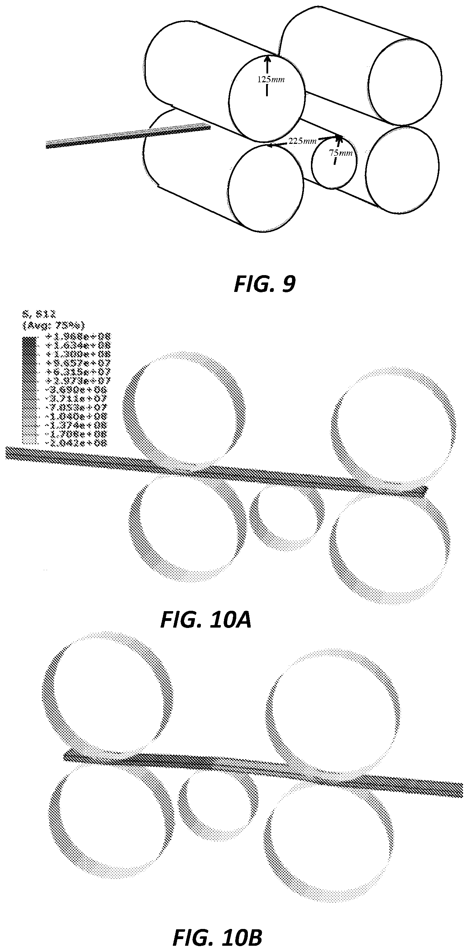

To verify the foregoing analysis and to relax some of the constraints introduced in the analytical study of SER of rectangular cross sections, viz. rate-independence, athermal plasticity, and quasi-static conditions, as well as to better account for the effect of residual stress and stress tri-axiality, a computational investigation of SER was conducted by dynamic-explicit finite element simulation. **FIG. 9** illustrates the computational model setup, and the caption describes the details of the simulated conditions. A mesh of 3,000 reduced-integration 8-node hexahedral elements, with enhanced strain hourglass control is used. To decrease mesh distortion problems arising from the intense deformation of rolling, ALE (Arbitrary Lagrangian Eulerian) methods are employed as implemented on ABAQUS\Explicit. For more expedient calculations, domain decomposition parallelization is used. A Johnson-Cook (JC) material law was developed, written as a VUMAT, and linked to ABAQUS\Explicit. JC accounts for strain hardening, rate dependence and thermal softening; all used material parameters are listed in Table 2. Temperature rise is approximated as adiabatic, at 10% of the plastic work, to be consistent with the fairly slow rolling speeds.

**Table 2**: Material Properties Used in Computational Model

| Property | Description | Value Selected | |
|---|---|---|---|
| E | Young's Modulus | 124 | GPa |
| v | Poisson's Ratio | 0.34 | - |
| P | Mass Density | 7850 | Kg/m$^3$ |
| A | Reference Strength | 90 | MPa |
| B | Strain Hardening Coefficient | 300 | MPa |
| C | Logarithmic Strain Rate Coefficient | 0.025 | - |
| $\dot{\varepsilon}_0$ | Reference Strain Rate | 1 | s$^{-1}$ |
| $n$ | Strain Hardening Exponent | 0.31 | - |
| $m$ | Thermal Softening Exponent | 1.06 | - |
| $T_{ref}$ | Reference Temperature | 300 | K |
| $T_m$ | Melting Temperature | 1300 | K |
| $C_v$ | Specific Heat Capacity, Constant Volume | 400 | IIK |
| $\alpha$ | Thermal Expansion Coefficient | $2 \times 10^{-5}$ | K$^{-1}$ |
| $\eta$ | Fraction of plastic work transformed to heat | 0.1 | - |
| $k$ | Hall-Fetch equation, square-root dependency factor | 0.74 | MPa $\sqrt{m}$ |
| $\sigma_0$ | Hall-Petch equation, reference effective strength | 70 | MPa |

Predicted shear stress distribution before and after mid-roller rise is shown in **FIG. 10**, exhibiting increased shear stress in the SER region, between leftmost and rightmost roller, because of the applied transverse load from the mid-roller. A flip in sign of shear stress across the mid-roller may also be seen, consistent with analytical prediction for transverse shear load (**FIG. 6C**). This shear enhancement in the SER region is designed to target additional grain refinement in the core layers, rather than the surface layers, of the rolled bar. A maximum displacement for the mid-roller of only 10 *mm* is recorded in this simulation, for the same level of grain refinement of the analytical model. It is deemed that this difference is reasonable, and attributed to the more detailed mechanical behavior accounted for in the computational simulation, and in particular due to the residual stresses now accounted for.

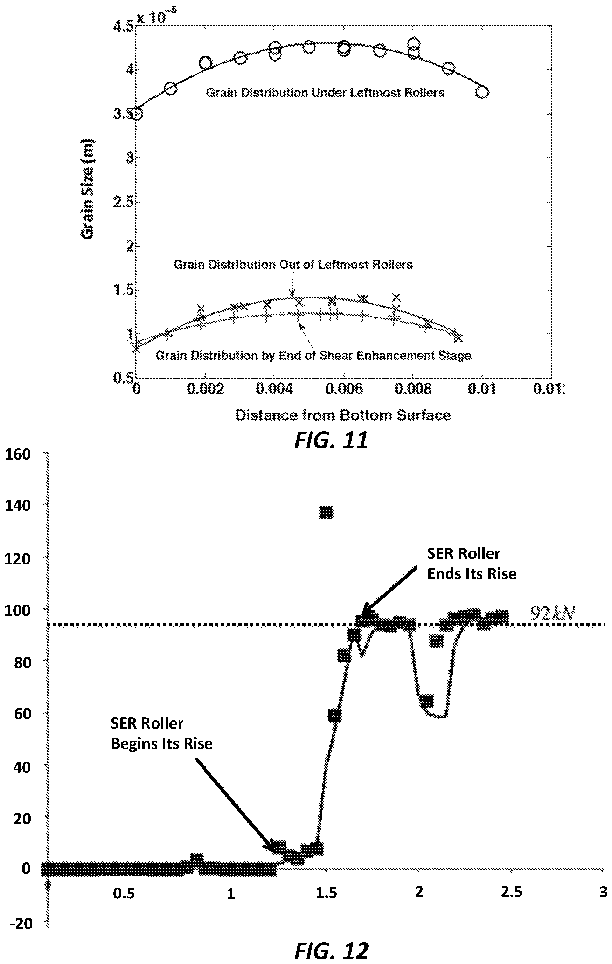

Grain sizes predicted in **FIG. 11** are comparable to those listed in Table 1 for the analytical model. Predicted computational forces fluctuate between 90$k$N and 94$k$N, when the SE-TL roller is at its highest. This is higher than the analytical model, again mostly due to residual stress effects now accounted for.

Finally, it is to be noted from **FIG. 11** that no grain refinement in surface layers took place during the SER stage; stresses induced there for given radius of curvature and axial tension are entirely below the surficial yield surface, everywhere between leftmost and rightmost rollers. This confirms computationally the analytical predictions, and indicates grain refinement can be entirely targeted to the core of rolled material, in a well-designed SER process.

The current invention provides a new method for rolled microstructures with enhanced grain size uniformity across the cross-section, and with smaller average grain sizes, which is called shear enhanced rolling. Shown herein are exemplary details in the workings of SER for rectangular cross sections, for a single SE-TL roller placed mid-span of an SER region, though the concepts and methods herein outlined apply to arbitrary cross-sectional shapes, and with ambient thermal gradients. SER relies on inducing longitudinal shear and axial tension in a rolled cross section to cause targeted grain refinement there, by keeping stresses there above the elastic limit. Corresponding stresses generated in surficial layers may be kept below their elastic limit with proper curvature and axial tension control; but even if above, materials obeying the Hall-Petch relation could still be targeted with greater grain refinement in their cores. SER in general requires keeping track of the longitudinal shear induced near the neutral axis, and the normal stresses induced near the surficial layers, and ensuring they are properly balanced for desired and appropriately designed grain refinement schemes.

The invention demonstrates longitudinal shear stress when induced in a rolled section, during or after rolling, will target grain refinement at and near a section's core, enabling increased grain uniformity across a cross section, and decreased average grain size in the section. According to the current invention, longitudinal shear is most easily induced by application of Transverse-Loads, which may be easily approximated from the difference between actual core grain size and desired core grain size, as well as section-average grain sizes, before and after SER. In one embodiment, passively spinning rollers can act the source of transverse loading if gradually displaced in a transverse direction between rolling stations. Further, passive SER rollers offer the least resistance to material flow during rolling, requiring minimal SER mechanical energy and forces. According to one embodiment, transverse SER displacements could be along any combination of axes, and may also be related to the difference between actual core grain size and desired core grain size. Further, control on axial tension in the material between rolling stations that enclose SER can limit the degree of stress unloading, to favor grain refinement in the material's core. In another aspect of the invention, materials with microstructural length scales obeying the Hall-Petch relation are especially well suited for SER treatment. Thermal gradients, controlled and/or natural, can be leveraged in the application of SER, to better control grain refinement and uniformity. Here, SER may be applied over multiple stages, consecutive or non-consecutive. In another embodiment, SER may be applied to arbitrary cross-sectional shapes being rolled.

The present invention has now been described in accordance with several exemplary embodiments, which are intended to be illustrative in all aspects, rather than restrictive. Thus, the present invention is capable of many variations in detailed implementation, which may be derived from the description contained herein by a person of ordinary skill in the art. For example confining axial tension to rolled metal segments of variable length, inducing axial tension to only part of a cross section (e.g. to the web but not the flanges of a beam), allowing axial tension to dominate shear (including zero shear as a limiting condition), are among many variations on this invention, all of which permit a control of the refinement at the rolled metal section core to different extents from that near the surfaces.

**Claims**

1. A method of increasing grain uniformity and refinement in rolled metal, comprising:

   a) applying an axial tension to a rolled metal section comprising a material composition that obeys a Hall-Petch relation, wherein said rolled metal section is secured at a first end and secured at a second end; and
   b) applying a transverse load to said rolled metal section between said first end and said second end, wherein said transverse load displaces said rolled metal section, wherein said transverse load is configured to induce a stress distribution in said rolled metal section, wherein said stress distribution alters a core of said rolled metal section to exceed an elastic limit and alters the outer layers of said rolled metal section to approach said elastic limit, wherein said axial tension, said transverse load and said displacement induce a smaller average grain size that is more uniformly distributed in said rolled metal section;

wherein said rolled metal section is disposed between a first roller pair and a second roller pair, wherein said first roller pair comprises a first top roller and a first bottom roller, wherein a bottom surface of said first top roller opposed a top surface of said first bottom roller, wherein said second roller pair comprises a second top roller and a second bottom roller, wherein a bottom surface of said second top roller opposes a top surface of said second bottom roller, wherein a third roller is positioned mid-span between said first roller pair and said second roller pair, wherein said first roller pair, said second roller pair, and said third roller are parallel cylinders with one another, wherein said tension is applied to said rolled metal section according to a desired average grain size in a cross-section of said rolled metal section, wherein said displacement is by said third roller onto said rolled metal section, wherein said displacement corresponds to a specific applied force and distance according to said desired average grain size in a cross-section of said metal section, wherein a stress of said metal section alters a core of said rolled metal section to exceed its elastic limit, wherein said stress of said rolled metal section disposes layers that are distant from a core in said rolled metal section below or near their elastic limits, wherein enhanced grain size uniformity in said metal section is achieved,
wherein the transverse load, V(x), at the third roller is defined by

$$V(x) = V(x_0) \equiv \frac{dM}{dx}(x_0) = \int_{y,z} y \cdot \left( \frac{d\sigma}{dx}(x_0, y, z) \right) dy\, dz$$

$$= -tc \left( \frac{n+1}{n+2} \right) \left( \frac{k}{\sqrt{\delta_f}} - \frac{k}{\sqrt{\delta_c}} \right),$$

;the axial tension, $T$, at the third roller is defined by

$$\mathrm{T} \cong -F_b = -2ct \left( \frac{k}{\sqrt{\delta_f}} \right),$$

wherein c is the half section height, assuming a rectangular cross section, t is the section thickness, assuming a rectangular cross section, $x_0$ is the left most position of zone A, axial component, $\delta_c$ is the grain size in section core, $\delta_f$ is the desired grain size for section core, and k is the Hall-Petch equation, square-root dependency factor; and
the applied force at the third roller is found from

$$P_{app} \cong 2 \left| V(x_p)\cos\alpha + \mathrm{T}(x_p)\sin\alpha \right|.$$

2. The method of increasing grain uniformity and refinement in rolled metal of claim 1, wherein said axial tension is induced using a source selected from the group consisting of hydraulic, pneumatic, mechanical, magnetic and electrical sources.

3. The method of increasing grain uniformity and refinement in rolled metal of claim 1, wherein said transverse load is induced using a source selected from the group consisting of hydraulic, pneumatic, mechanical, magnetic and electrical sources.

4. The method of increasing grain uniformity and refinement in rolled metal of claim 1, wherein said transverse load is balanced by moving or fixed supports at said first end and said second end of said rolled metal section.

5. The method of increasing grain uniformity and refinement in rolled metal of claim 4, wherein said moving or fixed supports are induced using a source selected from the group consisting of hydraulic, pneumatic, mechanical, magnetic and electrical sources.

**6.** The method of increasing grain uniformity and refinement in rolled metal of claim 1, wherein said transverse load comprises a fixed span, a fixed profile, a fixed strength and a fixed duration on or through at least one of the surfaces of said rolled metal section, or a variable span, a variable profile, a variable strength and a variable duration on or through at least one of the surfaces of said rolled metal section.

**7.** The method of increasing grain uniformity and refinement in rolled metal of claim 1, wherein a duration of said transverse load is up to or exceeds when a core of said rolled metal section deforms plastically and enhanced grain uniformity.

**Patentansprüche**

**1.** Verfahren zum Steigern der Korngleichförmigkeit und - verfeinerung bei gewalztem Metall, umfassend:

a) Anlegen einer axialen Spannung an einen gewalzten Metallabschnitt, der eine Materialzusammensetzung umfasst, die einer Hall-Petch-Beziehung folgt, wobei der gewalzte Metallabschnitt an einem ersten Ende befestigt ist und an einem zweiten Ende befestigt ist; und
b) Anlegen einer Querlast an den gewalzten Metallabschnitt zwischen dem ersten Ende und dem zweiten Ende, wobei die Querlast den gewalzten Metallabschnitt verschiebt, wobei die Querlast dazu konfiguriert ist, eine Spannungsverteilung in dem gewalzten Metallabschnitt zu induzieren, wobei die Spannungsverteilung einen Kern des gewalzten Metallabschnitts so verändert, dass er eine Elastizitätsgrenze überschreitet, und die äußeren Schichten des gewalzten Metallabschnitts so verändert, dass sie sich der Elastizitätsgrenze nähern, wobei die axiale Spannung, die Querlast und die Verschiebung eine kleinere durchschnittliche Korngröße induzieren, die gleichmäßiger in dem gewalzten Metallabschnitt verteilt ist; wobei der gewalzte Metallabschnitt zwischen einem ersten Walzenpaar und einem zweiten Walzenpaar angeordnet ist, wobei das erste Walzenpaar eine erste Oberwalze und eine erste Unterwalze umfasst, wobei eine Unterseite der ersten Oberwalze einer Oberseite der ersten Unterwalze gegenüberliegt, wobei das zweite Walzenpaar eine zweite Oberwalze und eine zweite Unterwalze umfasst, wobei eine Unterseite der zweiten Oberwalze einer Oberseite der zweiten Unterwalze gegenüberliegt, wobei eine dritte Walze in der Mitte der Spannweite zwischen dem ersten Walzenpaar und dem zweiten Walzenpaar angeordnet ist, wobei das erste Walzenpaar, das zweite Walzenpaar und die dritte Walze parallele Zylinder zueinander sind, wobei die Spannung auf den gewalzten Metallabschnitt entsprechend einer gewünschten durchschnittlichen Korngröße in einem Querschnitt des gewalzten Metallabschnitts angelegt wird, wobei die Verschiebung durch die dritte Walze auf den gewalzten Metallabschnitt erfolgt, wobei die Verschiebung einer spezifischen aufgebrachten Kraft und Entfernung entsprechend der gewünschten durchschnittlichen Korngröße in einem Querschnitt des Metallabschnitts entspricht, wobei eine Beanspruchung des Metallabschnitts einen Kern des gewalzten Metallabschnitts so verändert, dass er seine Elastizitätsgrenze überschreitet, wobei die Beanspruchung des gewalzten Metallabschnitts Schichten, die von einem Kern in dem gewalzten Metallabschnitt entfernt sind, unterhalb oder nahe ihrer Elastizitätsgrenzen anordnet, wobei eine erhöhte Korngrößengleichmäßigkeit in dem Metallabschnitt erreicht wird,

wobei die Querlast $V(x)$ an der dritten Rolle definiert ist durch

$$V(x) = V(x_0) \equiv \frac{dM}{dx}(x_0) = \int_{y,z} y \cdot \left( \frac{d\sigma}{dx}(x_0, y, z) \right) dy dz$$

$$- -tc \left( \frac{n+1}{n+2} \right) \left( \frac{k}{\sqrt{\delta_f}} - \frac{k}{\sqrt{\delta_c}} \right)'$$

; die axiale Spannung $T$ an der dritten Rolle definiert ist durch

$$T \cong -F_b = -2ct \left( \frac{k}{\sqrt{\delta_f}} \right),$$

wobei c die halbe Abschnittshöhe unter der Annahme eines rechteckigen Querschnitts ist, t die Abschnittsdicke unter der Annahme eines rechteckigen Querschnitts ist, $x_0$ die Position ganz links der Zone A ist,

axiale Komponente, $\delta_c$ die Korngröße im Abschnittskern ist, $\delta_f$ die gewünschte Korngröße für den Abschnittskern ist und k die Hall-Petch-Gleichung ist, Quadratwurzel-Abhängigkeitsfaktor; und
die an der dritten Walze aufgebrachte Kraft ergibt sich aus

$$P_{app} \cong 2\left|V\left(x_p\right)\cos\alpha + \mathrm{T}\left(x_p\right)\sin\alpha\right|,.$$

2. Verfahren zum Steigern der Korngleichmäßigkeit und - verfeinerung bei gewalztem Metall nach Anspruch 1, wobei die axiale Spannung unter Verwendung einer Quelle induziert wird, die aus der Gruppe ausgewählt ist, die aus hydraulischen, pneumatischen, mechanischen, magnetischen und elektrischen Quellen besteht.

3. Verfahren zum Steigern der Korngleichmäßigkeit und - verfeinerung bei gewalztem Metall nach Anspruch 1, wobei die Querlast unter Verwendung einer Quelle induziert wird, die aus der Gruppe ausgewählt ist, die aus hydraulischen, pneumatischen, mechanischen, magnetischen und elektrischen Quellen besteht.

4. Verfahren zum Steigern der Korngleichmäßigkeit und - verfeinerung bei gewalztem Metall nach Anspruch 1, wobei die Querlast durch bewegliche oder feste Stützen an dem ersten Ende und dem zweiten Ende des gewalzten Metallabschnitts ausgeglichen wird.

5. Verfahren zum Steigern der Korngleichmäßigkeit und - verfeinerung bei gewalztem Metall nach Anspruch 4, wobei die beweglichen oder festen Stützen unter Verwendung einer Quelle induziert werden, die aus der Gruppe ausgewählt ist, die aus hydraulischen, pneumatischen, mechanischen, magnetischen und elektrischen Quellen besteht.

6. Verfahren zum Steigern der Korngleichmäßigkeit und - verfeinerung bei gewalztem Metall nach Anspruch 1, wobei die Querlast eine feste Spannweite, ein festes Profil, eine feste Stärke und eine feste Dauer auf oder durch mindestens eine der Oberflächen des gewalzten Metallabschnitts oder eine variable Spannweite, ein variables Profil, eine variable Stärke und eine variable Dauer auf oder durch mindestens eine der Oberflächen des gewalzten Metallabschnitts umfasst.

7. Verfahren zum Steigern der Korngleichmäßigkeit und - verfeinerung bei gewalztem Metall nach Anspruch 1, wobei eine Dauer der Querlast bis zu dem Zeitpunkt, an dem sich ein Kern des gewalzten Metallabschnitts plastisch verformt und die Korngleichmäßigkeit erhöht wird, reicht oder darüber hinausgeht.

## Revendications

1. Procédé d'augmentation de l'uniformité et du raffinement du grain dans du métal laminé, comprenant :

   a) l'application d'une tension axiale à une section de métal laminé comprenant une composition de matériau qui obéit à une relation de Hall-Petch, dans lequel ladite section de métal laminé est fixée à une première extrémité et fixée à une seconde extrémité ; et
   b) l'application d'une charge transversale à ladite section de métal laminé entre ladite première extrémité et ladite seconde extrémité, dans lequel ladite charge transversale déplace ladite section de métal laminé, dans lequel ladite charge transversale est configurée pour induire une répartition des contraintes dans ladite section de métal laminé, dans lequel ladite répartition des contraintes modifie une âme de ladite section de métal laminé pour dépasser une limite élastique et modifie les couches externes de ladite section de métal laminé pour se rapprocher de ladite limite élastique, dans lequel ladite tension axiale, ladite charge transversale et ledit déplacement induisent une taille de grain moyenne plus petite qui est plus répartis uniformément dans ladite section de métal laminé ;

   dans lequel ladite section de métal laminé est disposée entre une première paire de rouleaux et une seconde paire de rouleaux, dans lequel ladite première paire de rouleaux comprend un premier rouleau supérieur et un premier rouleau inférieur, dans lequel une surface inférieure dudit premier rouleau supérieur est opposée à une surface supérieure dudit premier rouleau inférieur, dans lequel ladite seconde paire de rouleaux comprend un deuxième rouleau supérieur et un deuxième rouleau inférieur, dans lequel une surface inférieure dudit deuxième rouleau supérieur s'oppose à une surface supérieure dudit deuxième rouleau inférieur, dans lequel un troisième rouleau est positionné à mi-portée entre ladite première paire de rouleaux et ladite seconde paire de rouleaux, dans lequel ladite première paire de rouleaux, ladite seconde paire de rouleaux et ledit troisième rouleau sont des cylindres parallèles l'un à l'autre, dans lequel ladite tension est appliquée à ladite section de métal laminé selon une taille de grain moyenne souhaitée dans une section transversale de ladite section de métal laminé, dans lequel ledit déplacement s'effectue par ledit troisième rouleau sur ladite section de métal laminé, dans lequel ledit déplacement correspond à une force et une distance appliquées spécifiques selon ladite taille de grain moyenne souhaitée dans une section transversale de ladite section de métal, dans lequel une contrainte de ladite section de métal modifie une âme de ladite section de métal laminé pour dépasser sa limite élastique, dans lequel ladite contrainte de ladite section de métal laminé dispose de couches qui sont éloignées d'une âme dans ladite section de métal laminé au-dessous ou à proximité de leurs limites élastiques, dans lequel une uniformité accrue de la taille de grain dans ladite section de métal est obtenue,

dans lequel la charge transversale, V(x), au niveau du troisième rouleau est définie par

$$V(x) = V(x_0) \equiv \frac{dM}{dx}(x_0) = \int_{y,z} y \cdot \left( \frac{d\sigma}{dx}(x_0, y, z) \right) dy dz$$

$$= -tc \left( \frac{n+1}{n+2} \right) \left( \frac{k}{\sqrt{\delta_f}} - \frac{k}{\sqrt{\delta_c}} \right)'$$

;la tension axiale, *T*, au niveau du troisième rouleau est définie par

$$\text{T} \cong -F_b = -2ct \left( \frac{k}{\sqrt{\delta_f}} \right),$$

où c est la demi-hauteur de la section, en supposant une section rectangulaire, t est l'épaisseur de la section, en supposant une section rectangulaire, $x_0$ est la position la plus à gauche de la zone A, composante axiale, $\delta_c$ est la taille de grain dans l'âme de la section, $\delta_f$ est la taille de grain souhaitée pour l'âme de la section, et k est l'équation de Hall-Petch, facteur de dépendance de la racine carrée ; et la force appliquée au troisième rouleau est trouvée à partir de

$$P_{app} \cong 2 \left| V(x_p) \cos \alpha + \text{T}(x_p) \sin \alpha \right|.$$

2. Procédé d'augmentation de l'uniformité et du raffinement du grain dans du métal laminé selon la revendication 1, dans lequel ladite tension axiale est induite à l'aide d'une source choisie dans le groupe constitué de sources hydrauliques, pneumatiques, mécaniques, magnétiques et électriques.

3. Procédé d'augmentation de l'uniformité et du raffinement du grain dans du métal laminé selon la revendication 1, dans lequel ladite charge transversale est induite à l'aide d'une source choisie dans le groupe constitué de sources hydrauliques, pneumatiques, mécaniques, magnétiques et électriques.

4. Procédé d'augmentation de l'uniformité et du raffinement du grain dans du métal laminé selon la revendication 1, dans lequel ladite charge transversale est équilibrée par des supports mobiles ou fixes à ladite première extrémité et à ladite seconde extrémité de ladite section de métal laminé.

5. Procédé d'augmentation de l'uniformité et du raffinement du grain dans du métal laminé selon la revendication 4, dans lequel lesdits supports mobiles ou fixes sont induits à l'aide d'une source choisie dans le groupe constitué de sources hydrauliques, pneumatiques, mécaniques, magnétiques et électriques.

6. Procédé d'augmentation de l'uniformité et du raffinement du grain dans du métal laminé selon la revendication 1, dans lequel ladite charge transversale comprend une portée fixe, un profil fixe, une résistance fixe et une durée fixe sur ou à travers au moins une des surfaces de ladite section de métal laminé, ou une portée variable, un profil variable, une résistance variable et une durée variable sur ou à travers au moins une des surfaces de ladite section de métal laminé.

**7.** Procédé d'augmentation de l'uniformité et du raffinement du grain dans du métal laminé selon la revendication 1, dans lequel une durée de ladite charge transversale est atteinte ou dépasse lorsqu'une âme de ladite section de métal laminé se déforme plastiquement et améliore l'uniformité du grain.

**FIG. 1**

CONTROLLED NATURAL THERMAL GRADIENT

Stationary Stage L

Moving Stage M

Stationary Stage N

Roller Pair

SE-TL (E.g. Plunger)

Roller Pair

SE-TLs (E.g. Roller Cluster)

SE-TLs (E.g. Roller Distribution)

FIG. 2

**FIG. 3**

**FIG. 4**

**FIG. 5**

**FIG. 6A**

**FIG. 6B**

**FIG. 6C**

**FIG. 6D**

*FIG. 7*

EP 3 387 410 B1

**SER STRESS INCREMENTS**

stress ratio at NL
stress ratio near Surface

X: 0
Y: 1.116

X: 225
Y: 0.8178

Distance from left roller (mm)

*FIG. 8*

**FIG. 9**

**FIG. 10A**

**FIG. 10B**

**FIG. 11**

**FIG. 12**

**EP 3 387 410 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 478048 A
- US 2012174643 A
- US 4826138 A
- US 4539830 A